# EUROPEAN PATENT APPLICATION

(11) **EP 4 095 824 A1**
(43) Date of publication of application: **30.11.2022**
(21) Application number: 21180080.0
(22) Date of filing: 17.06.2021
(51) Int. Cl.: G09B 9/042

(54) **A DUAL-FUNCTION ELECTRIC VEHICLE**

(30) Priority: 27.05.2021 CN 202110583056
(71) Applicant: Shenzhen Cammus Electronic Technology Co.,Ltd, 518000 Guangdong (CN)
(72) Inventor: HU, Jian, Shenzhen City, Guangdong Province (CN)
(74) Representative: Sánchez Margareto, Carolina

(57) **Abstract**

The invention discloses a dual-function electric vehicle, which falls under category of electric go-kart, toy car and ORV. The dual-function electric vehicle includes throttle unit, brake unit, VCU, battery group, steering wheel unit, mode change-over switch, steering wheel, driving wheel, and external PC/ game machine. The throttle unit is connected with the VCU for controlling the torque output of the whole vehicle. The brake unit is connected with VCU. The steering wheel unit includes lock switch, the second motor and steering wheel. The second motor outputs to motor shaft at both ends, one end connecting with the steering wheel and the other end with the lock switch. VCU is connected with the second motor electrical signal, and battery group and external PC/game machine are connected to VCU. The dual-function electric vehicle can be converted into two working modes through mode change-over switch. It can be used as electric vehicle and racing simulator. It is simple to operate and multifunctional, reducing production cost.

## Description

### Technical field

The invention falls under the technical field of electric go-kart, toy car and off-road vehicle (ORV), in particular relates to a dual-function electric vehicle.

### Background technology

In the field of electric go-kart, toy car and off-road vehicle (ORV), they usually provide simple driving function. The driver operates the steering wheel, accelerate pedal and brake pedal to realize vehicle operation. In the field of racing games, the simulation steering wheel, accelerator pedal and brake pedal are usually used to provide signals to PC/ game machine to operate the racing game.

However, for the above two categories of vehicles with two different functions, each category can provide only one function.

### Content of invention

The purpose of the invention is to provide a dual-function electric vehicle, which can be used as electric vehicle for driving and as racing simulator, with the two functions switched at any time

To realize the above purposes, the invention provides the following technical scheme: a dual-function electric vehicle, which includes throttle unit, brake unit, VCU, battery group, steering wheel unit, mode change-over switch, steering wheel, driving wheel and external PC/ game machine.

The described throttle unit includes a throttle pedal and a throttle signal line. The throttle pedal is connected with the VCU through the throttle signal line, for controlling the torque output of the whole vehicle.

The described brake unit includes brake pedal, brake wire, brake signal line, brake switch and brake caliper. One end of the brake wire and the brake signal line is connected with the brake pedal, the other end of the brake wire is connected to the brake caliper, and the brake switch can manually control the caliper braking, and the other end of the brake signal line is connected with the VCU.

The described steering wheel unit includes lock switch, the second motor and steering wheel. One end of output shaft of the second motor is connected with the steering wheel and the other end with a lock switch.

The described VCU electrical signal is connected with the first motor, which is connected with the driving wheel. The VCU is connected with the second motor electrical signal, and the battery group and PC/ game machine are connected to the VCU.

Preferably, the steering wheel is also connected with steering column, whose end which is away from steering wheel is connected to the lock switch, whose end which is away from steering column is fixed to the output motor shaft of the second motor, which passes through the motor casing, and the other end is connected to the steering wheel.

Preferably, the VCU collects throttle signal, braking signal and steering signal, and connects to the PC/ game machine through USB or other interface.

Preferably, the PC/ game machine can run racing games, and feed back signals to VCU, which drives the second motor to realize force feedback of steering wheel.

The utility model has the advantages of: the two-function electric vehicle can be converted into two working modes through mode change-over switch. It can be used as an electric vehicle to drive or as a racing simulator. It is simple to operate and multifunctional, reducing production cost.

### Illustrated instruction

Fig. 1 is a structural diagram of a dual-function electric vehicle provided by the invention
Fig. 2 is a structural diagram of the steering wheel unit of a dual-function electric vehicle provided by the invention
Fig. 3 is a structural diagram of the separation of a lock switch for a dual-function electric vehicle provided by the invention

In the figure: 1. Steering wheel; 2. The second motor; 3. Lock switch; 4. Steering column.

### Specific method of execution

In order to further explain the content, characteristics and efficacy of the invention, we hereby give detailed description through the following example in conjunction with appended figures.

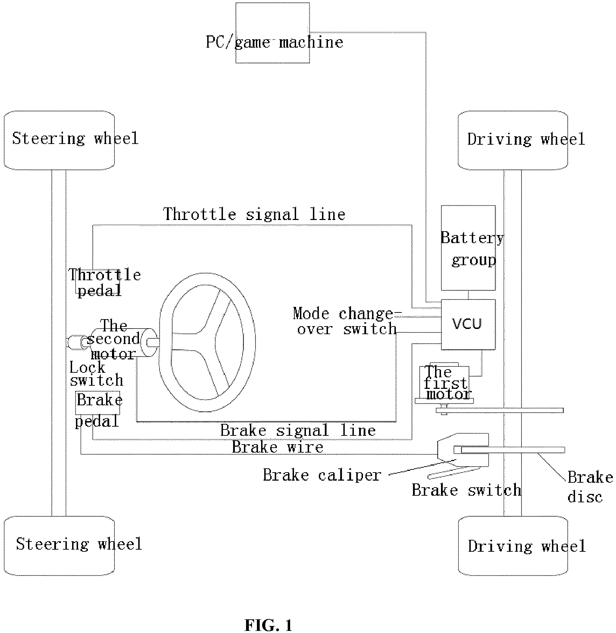

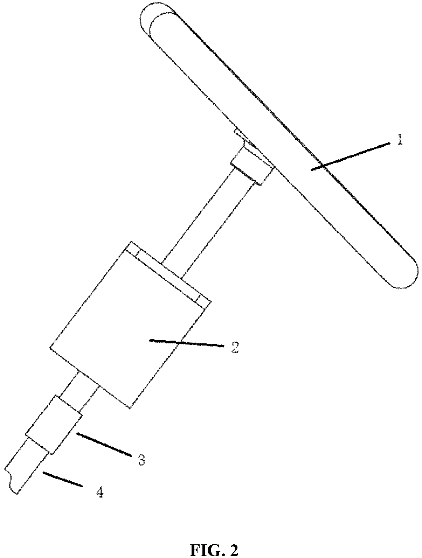

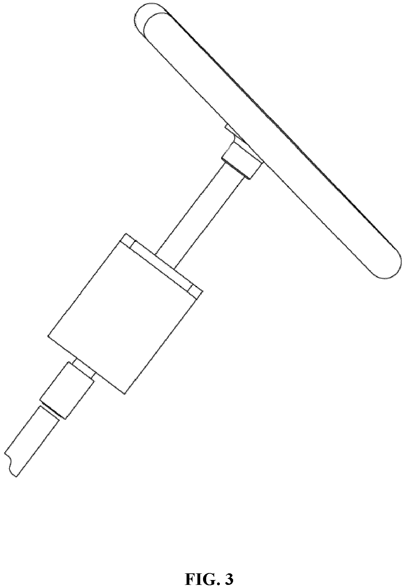

Please refer to Figs. 1 to 3 at the same time. Detailed description of the dual-function electric vehicle of the invention is given in conjunction with the appended figures.

The dual-function electric vehicle includes throttle unit, brake unit, control unit, battery group, steering wheel unit, mode change-over switch, steering wheel, driving wheel, and external PC/ game machine.

The throttle unit includes throttle pedal and throttle signal line. The throttle pedal is connected with the VCU through the throttle signal line, for controlling the torque output of the whole vehicle.

The brake unit includes brake pedal, brake wire, brake signal line, brake switch and brake caliper. One end of the brake wire and the brake signal line is connected with the brake pedal, the other end of the brake wire is connected to the brake caliper, and the brake switch can manually control the caliper braking, and the other end of the brake signal line is connected with VCU.

The steering wheel unit includes lock switch 3, the second motor 2, the steering wheel 1. One end of output shaft of the second motor 2 is connected with the steering wheel 1 and the other end with the lock switch 3.

The VCU electrical signal is connected with the first motor, which is connected with the driving wheel. The VCU is connected with the second motor electrical signal, and the battery group and PC/ game machine are connected to the VCU.

Specifically, the steering wheel is also connected with steering column 4, whose end which is away from steering wheel is connected to the lock switch 3, whose end which is away from steering column is fixed to the output motor shaft of the second motor 2, which passes through the motor casing, and the other end is connected to the steering wheel 1.

Specifically, VCU collects throttle signal, brake signal and turn signal, and connects the PC/ game machine through USB or other interfaces.

Specifically, PC/ game machine can run racing games, feed signals back to control unit, and VCU drives the second motor to realize force feedback of steering wheel.

In the above example, when the electric vehicle mode is started, the working principle is as follows:
When the mode change-over switch is turned on, the program enters the electric vehicle mode. The lock switch connects to the second motor and steering column, the brake switch releases the brake caliper, and the battery group provides system power. VCU drives the first motor, which controls the driving wheel rotation, realizing power output, and at the same time, VCU drives the second motor, realizing power-assisted steering, and the accelerator pedal provides signal to VCU, controlling the torque output of the whole vehicle. The brake pedal controls the brake caliper of the driving wheel through the wire, meanwhile provides the brake signal to VCU.

In the above example, when the racing car simulator mode is started, the working principle is as follows:
When the mode change-over switch is closed, the program enters the racing car simulator mode. VCU collects the throttle, braking and steering signals, connects to PC or other game machine through USB or other interfaces, and PC or other game machine runs racing games. The lock switch separates the second motor from the steering column. The brake switch locks the brake caliper to prevent the wheel from turning. VCU obtains the feedback signal from PC/ game machine to drive the second motor, realizing force feedback of steering wheel.

In particular, the principle of the dual-function electric vehicle provided by the invention is the same as that of the three-wheel and multi-wheel electric vehicle. The principle of front wheel braking and four-wheel braking is the same. The principle of hydraulic and electronic braking is the same.

Although example of the invention has been shown and described, it is understandable that ordinary technicians in the field can make changes, modifications, replacements and variations of the example without departing from the principle and spirit of the invention. The scope of the invention is limited by the appended Claims and the equivalent.

## Claims

1. The utility model is a dual-function electric vehicle, which is **characterized by** the inclusion of throttle unit, brake unit, VCU, battery group, steering wheel unit, mode change-over switch, steering wheel, driving wheel, external PC/ game machine.
The described throttle unit includes throttle pedal and throttle signal line. The throttle pedal is connected with the VCU through the throttle signal line, for controlling the torque output of the whole vehicle.
The described brake unit includes brake pedal, brake wire, brake signal line, brake switch and brake caliper. One end of the brake wire and brake signal line is connected with the brake pedal. The other end of the brake wire is connected to the brake caliper. The brake switch can manually control the caliper braking. The other end of the brake signal line is connected with VCU.
The described steering wheel unit includes lock switch, the second motor and steering wheel. The second motor outputs power to motor shaft at both ends, one end connected with the steering wheel and the other end a lock switch.
The described VCU electrical signal is connected with the first motor, which is connected with the driving wheel. The VCU is connected with the electrical signal of the second motor, and the battery group and external PC/game machine are connected to the VCU.

2. The dual-function electric vehicle described according to Claim 1 has the features that the steering wheel is also connected with steering column, whose end which is away from steering wheel is connected to the lock switch, whose end which is away from steering column is fixed to the output motor shaft of the second motor, which passes through the motor casing, and the other end is connected to the steering wheel.

3. The dual-function electric vehicle described according to Claim 1 has the features that the VCU drives the second motor to realize power-assisted steering.

4. The dual-function electric vehicle described according to Claim 1 has the features that the VCU collects throttle signal, brake signal and steering signal, and connects to the PC/ game machine through USB or other interfaces.

5. The dual-function electric vehicle described according to Claim 1 has the features that the external device includes PC and game machine, which can run racing games, and feed back the signal to the VCU, which drives the second motor to realize steering wheel force feedback.
